# EUROPÄISCHE PATENTANMELDUNG

(11) **EP 3 587 380 A1**
(43) Veröffentlichungstag der Anmeldung: **01.01.2020**
(21) Anmeldenummer: 18180074.9
(22) Anmeldetag: 27.06.2018
(51) Int. Cl.: C04B 40/06, C04B 111/00, C04B 26/02, C04B 26/06, C08F 222/10

(54) **VERWENDUNG VON ALKYLIMIDAZOLIDON(METH)ACRYLATEN ALS REAKTIVVERDÜNNER IN EINER REAKTIONSHARZ-ZUSAMMENSETZUNG**

(71) Anmelder: HILTI Aktiengesellschaft, 9494 Schaan (LI)
(72) Erfinder: Bunzen, Jens, 86159 Augsburg (DE); Park, Natja, 81247 München (DE); Strobel-Schmidt, Rainer, 86825 Bad Woerishofen (DE); Neuerburg, Ralf, 86157 Augsburg (DE); Schaefers, Klaus, 86916 Kaufering (DE)
(74) Vertreter: Hilti Aktiengesellschaft Corporate Intellectual Property

(57) **Zusammenfassung**

Die vorliegende Erfindung betrifft die Verwendung von Alkylimidazolidon(meth)acrylaten, insbesondere 1-Ethyl-imidazolidyl-2-on-(meth)acrylat, als Reaktivverdünner in der Harzkomponente einer Reaktionsharz-Zusammensetzung zur chemischen Befestigung eines Verankerungsmittels in einem Bohrloch. Durch diese Verwendung von Alkylimidazolidon(meth)acrylaten als Reaktivverdünner wird die Leistungsfähigkeit einer Reaktionsharz-Zusammensetzung in der Zugzone, also im gerissenen oder ferner von Einreißen bedrohten Beton, insbesondere im dynamischen Riss verbessert. Die Erfindung betrifft des Weiteren die Verwendung einer Reaktionsharz-Zusammensetzung, welche in ihrer Harzkomponente ein Alkylimidazolidon(meth)acrylat enthält, als Injektionsmörtel zur chemischen Befestigung eines Verankerungsmittels in einem Bohrloch (also als chemischer Dübel).

## Beschreibung

Die vorliegende Erfindung betrifft die Verwendung von Alkylimidazolidon(meth)acrylaten, insbesondere 1-Ethyl-imidazolidyl-2-on-(meth)acrylat, als Reaktivverdünner in der Harzkomponente einer Reaktionsharz-Zusammensetzung zur chemischen Befestigung eines Verankerungsmittels in einem Bohrloch. Durch diese Verwendung von Alkylimidazolidon(meth)acrylaten als Reaktivverdünner wird die Leistungsfähigkeit einer Reaktionsharz-Zusammensetzung in der Zugzone, also im gerissenen oder von Einreißen bedrohten Beton, insbesondere im dynamischen Riss verbessert. Die Erfindung betrifft des Weiteren die Verwendung einer Reaktionsharz-Zusammensetzung, welche in ihrer Harzkomponente ein Alkylimidazolidon(meth)acrylat enthält, als Injektionsmörtel zur chemischen Befestigung eines Verankerungsmittels in einem Bohrloch (also als chemischer Dübel).

Die Verwendung von chemischen Befestigungsmitteln auf Basis radikalisch härtbarer Reaktionsharze ist seit langem bekannt. Im Bereich der Befestigungstechnik hat sich die Verwendung von Harzmischungen als organisches Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente (die Harzkomponente) die Harzmischung und die andere Komponente (die Härterkomponente) das Härtungsmittel enthält. Andere, übliche Bestandteile, wie beispielsweise Füllmittel, Beschleuniger, Stabilisatoren, Lösungsmittel und Reaktivverdünner, können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet.

An Reaktionsharze werden in der chemischen Befestigungstechnik, z.B. bei Verwendung als Dübelmassen, hohe Anforderungen gestellt, da bei dieser Anwendung die mechanische Stärke und die Haftung an mineralischen Untergründen und auch an anderen Untergründen, wie Glas, Stahl und dergleichen, sehr gut sein müssen. Eine Größe für die Beurteilung der mechanischen Stärke und der Hafteigenschaften ist die sogenannte Versagensverbundspannung. Eine niedrige Versagensverbundspannung weist auf geringe Zugfestigkeit und geringe Haftung am Untergrund hin. Bei Verwendung von Reaktionsharzmassen als organisches Bindemittel, insbesondere für Mörtel- und/oder Dübelmassen, müssen auch unter strengen Bedingungen hohe Versagensverbundspannungen erreicht werden.

Bei Verankerungen im Beton ist fast immer davon auszugehen, dass Risse im Verankerungsbereich vorhanden sind, die die Tragfähigkeit der Verankerungen beeinflussen. Risse können überall im Beton zu jeder Zeit entstehen. Faktoren dafür sind Belastungen wie Eigengewicht, Verkehrs- oder Windlasten, Schwinden und Kriechen des Betons oder äußere Einflüsse wie Erdbeben oder Erschütterungen, die Spannungen, Verformungen und damit Rissbildung zur Folge haben. Bei einem durchhängenden Bauteil aus Beton erzeugt eine Durchbiegung im oberen Querschnittsbereich durch Druckkraft eine Stauchung bzw. eine Druckzone, während im unteren Querschnittsbereich Zugkräfte zu einer Dehnung und damit zur Bildung einer Zugzone führen. Beton ist jedoch nicht in der Lage, sich zu dehnen und nennenswerte Zugkräfte aufzunehmen, Stahleinlagen, die sogenannte Bewehrung, hingegen schon. Während sich dem entsprechend die Bewehrungsstäbe unbeschadet dehnen, reißt der Beton: es bilden sich unzählige, mit bloßem Auge kaum sichtbare Risse. Man spricht dann von der gerissenen Zugzone.

Bei Verwendung der bekannten Verankerungen für Befestigungen in der rissanfälligen Zugzone eines Bauwerkes, muss damit gerechnet werden, dass die entstehenden Risse durch die Schwächungsstellen bildenden Bohrlöcher verlaufen. Öffnet sich ein solcher durch ein Bohrloch verlaufender Riss, so besteht die Gefahr, dass die Verbindung zwischen der aushärtenden Masse und der Bohrlochwandung abreißt und der Verankerungswert der Verankerung abnimmt. Dies führt meist zu einem totalen Ausfall der Befestigung durch Überbelastung der noch verbleibenden Verankerung.

Damit Dübelmassen in Untergründen eingesetzt werden können, die geologisch oder anwendungsbedingt zu Rissen neigen, müssen diese zudem hohen Anforderungen an das Nachspreizverhalten genügen, damit aufgrund des Risses, die Befestigung nicht versagt. Besonders bei Deckenanwendungen, und vor allem in entwickelten Märkten wird mit gerissenem Beton gearbeitet. Beton ist allgemein Druckfest, aber nicht zugfest. In den meisten Fällen kann daher eine Rissbildung während der Anwendung nicht ausgeschlossen werden, weshalb von vornherein mit gerissenem Beton geplant bzw. gearbeitet wird.

Hierzu bedarf es entweder einer speziellen Anpassung der Dübelmassen oder spezieller Befestigungs- bzw. Hilfsmittel, was die Anwendung aufwändiger und insbesondere bei der Anpassung der Dübelmasse durch den Einsatz von Additiven teurer macht.

Ein spezielles Befestigungsmittel ist etwa aus der EP 0568802 A1 bekannt, die einen Anker zur Verankerung mittels einer Verbundmasse in einem Bohrloch beschreibt, der einen Gewindebolzen mit einem eine Anschlagschulter bildenden erweiterten Abschnitt aufweist und von einer Hülse umschlossen ist.

Eine alternative Lösung eine Befestigung ohne spezielles Befestigungsmittel für gerissenen Beton tauglich zu machen, ist aus der WO 2006/048110 A1 bekannt, die eine Verankerungsanordnung beschreibt, bei der das Verhältnis von Ankerstangendurchmesser zu Bohrlochdurchmesser in einem bestimmten Bereich liegen muss und ferner das Verhältnis von Ankerstangendurchmesser zu Bohrlochdurchmesser in einer bestimmten Beziehung zur Verbundspannung stehen muss.

Den Einsatz spezieller Additive in Dübelmassen beschreibt die WO 2011/072789 A1, gemäß der die Zugabe von Silanen, die zur Teilnahme an der Polymerisierung mit einem radikalisch härtenden Kunstharz befähigte Gruppen aufweisen und in jedem Fall Sigebundene hydrolysierbare Gruppen aufweisen, zu einer guten Leistung im gerissenen Beton führt. Diese Additive sind jedoch teuer und weisen schwächen bei der Lagerfähigkeit auf.

Die DE 102011055883 A1 beschreibt eine ähnliche Lösung, wobei durch die Zugabe eines sehr harten Zuschlags mit einer Mohs-Härte von mindestens 8 und vorzugsweise eines Silans zu einer Verankerungsmasse die Verankerungsmasse unter anderem anderen in ein Risse aufweisendes Bohrloch eingebracht wird.

Die Erfinder haben für eine bestimmte Verbindungsklasse von (Meth)acrylaten, nämlich, Alkylimidazolidon(meth)acrylaten gefunden, dass sie als Reaktivverdünner in Reaktionsharz-Zusammensetzungen verwendet werden können. Dies hat den Vorteil, dass zur Verwendung von Reaktionsharzmörteln nicht mehr auf spezielle Ankerstangen oder individuell angepasste Lösungen (zusätzliche Vorrichtungen oder angepasste Zusammensetzungen der Reaktionsharzmörtel) zurückgegriffen werden muss.

Alkylimidazolidonacrylate und -methacrylate sind bekannt für ihre Rolle bei der Bildung von Polymeren, die für Beschichtungen und Klebstoffe zur Behandlung von Papier und Textilien, für deren Verwendung als Lederbehandlungsmittel und zur Produktion von Emulsionsfarben verwendbar sind. Deren vorteilhafter Einsatz in der Bauchemie, insbesondere bei der chemischen Befestigung von Verankerungsmitteln in Bohrlöchern ist jedoch unbekannt.

Überraschenderweise zeigen sich besonders gute Eigenschaften bei der erfindungsgemäßen Verwendung von Alkylimidazolidon(meth)acrylaten in Reaktionsharzmörteln hinsichtlich der Leistungsfähigkeit im gerissenen Beton, insbesondere im dynamischen Riss, unter Verwendung von normalen Gewindestangen.

Schließlich kann eine gegenüber entsprechenden Reaktionsharzmörteln ohne die Verwendung derartiger Alkylimidazolidon(meth)acrylate als Reaktivverdünner erhöhte Leistungsfähigkeit im gerissenen Beton, insbesondere im dynamischen Riss, gefunden werden, nach einem im Beispielteil näher beschriebenen Verfahren.

Die Aufgabe der Erfindung ist es, eine Verbindung zur Verwendung als Reaktivverdünner in einer Reaktionsharz-Zusammensetzung, insbesondere in einem Injektionssystem, für die chemische Befestigung bereitzustellen, welche der Reaktionsharz-Zusammensetzung eine hohe Leistungsfähigkeit in gerissenem Beton, insbesondere im dynamischen Riss verleiht.

Diese Aufgabe wird durch die Verwendung von Alkylimidazolidon(meth)acrylat als funktioneller Reaktivverdünner gemäß Anspruch 1 gelöst.

Eine weitere Aufgabe der Erfindung ist die Bereitstellung eines Verfahrens zur chemischen Befestigung mittels einer Reaktionsharz-Zusammensetzung, welches sich durch den in der Reaktionsharz-Zusammensetzung enthaltenen Reaktivverdünner von bislang bekannten Befestigungsverfahren unterscheidet.

Diese Aufgabe wird durch das Verfahren gemäß Anspruch 14 gelöst, welches Alkylimidazolidon(meth)acrylat als Reaktivverdünner verwendet.

Durch die erfindungsgemäße Verwendung eines Alkylimidazolidon(meth)acrylats als funktioneller Reaktivverdünner ist es möglich, eine im Vergleich zum Stand der Technik einfache Reaktionsharz-Zusammensetzungen, z.B. Injektionsmörtel zur Befestigung von Verankerungsmitteln, auch ohne die zusätzliche Verwendung von weitere Additiven, bereitzustellen, welche eine hohe Leistungsfähigkeit in gerissenem Beton ermöglicht. Das Alkylimidazolidon(meth)acrylat als Reaktivverdünner erlaubt auch den Einsatz verschiedener Basisharze und ggf. zusätzlicher Reaktivverdünner in einem breiten Mischungsverhältnis.

Zum besseren Verständnis der Erfindung werden die folgenden Erläuterungen der hierin verwendeten Terminologie als sinnvoll erachtet. Im Sinne der Erfindung bedeuten:
- *"Basisharz"* eine üblicherweise feste oder hochviskose radikalisch polymerisierbare Verbindung, welche durch Polymerisation härtet;
- *"Harzmischung"* eine Mischung aus einem oder mehreren Basisharz(en) und Beschleuniger(n) und Inhibitor(en) und Reaktivverdünner(n);
- *"Harzkomponente (A)"* eine Mischung aus der Harzmischung und anorganischen und/oder organischen Zuschlagstoffen;
- *"Härtungsmittel"* Stoffe, welche die Polymerisation (das Härten) des Basisharzes bewirken;
- *"Beschleuniger"* eine zur Beschleunigung der Polymerisationsreaktion (Härtung) fähige Verbindung, die dazu dient, die Bildung von Radikalen zu beschleunigen;
- *"Stabilisator"* eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden; diese Verbindungen werden üblicherweise in so geringen Mengen eingesetzt, dass die Gelzeit nicht beeinflusst wird;
- *"Inhibitor"* ebenfalls eine zur Inhibierung der Polymerisationsreaktion (Härtung) fähige Verbindung, die dazu dient, den Start der Polymerisationsreaktion unmittelbar nach der Zugabe des Härtungsmittels zu verzögern; diese Verbindungen werden üblicherweise in solchen Mengen eingesetzt, dass die Gelzeit beeinflusst wird;
- *"Reaktivverdünner"* flüssige oder niedrigviskose Monomere und Basisharze, welche die Basisharze, den Harz-Masterbatch oder die Harzmischung verdünnen und dadurch die zu deren Applikation notwendige Viskosität verleihen, zur Reaktion mit dem Basisharz befähigte funktionelle Gruppen (FG-I) enthalten und bei der Polymerisation (Härtung) zum überwiegenden Teil Bestandteil der gehärteten Masse werden;
- *"funktioneller Reaktivverdünner"* ein Reaktivverdünner, wie er eben beschrieben wurde, wobei der funktionelle Reaktivverdünner durch eine weitere funktionelle Gruppe gekennzeichnet ist, die sich von der funktionellen Gruppe unterscheidet, welche zur Reaktion mit dem Basisharz befähigt ist, wobei die weitere funktionelle Gruppe (FG-II) der Zusammensetzung eine bestimmte Eigenschaft verleiht, was Reaktivverdünner ohne diese weitere funktionelle Gruppe(n) (FG-II) nicht vermögen;
- *"Zweikomponenten-System"* ein Reaktionsharz-System, das zwei voneinander getrennt gelagerte Komponenten, im Allgemeinen eine Harzkomponente und eine Härterkomponente, umfasst, so dass eine Härtung des Reaktionsharzes erst nach dem Mischen der beiden Komponenten erfolgt;
- *"Mehrkomponenten-System"* ein Reaktionsharz-System, das mehrere voneinander getrennt gelagerte Komponenten umfasst, so dass eine Härtung des Reaktionsharzes erst nach dem Mischen aller Komponenten erfolgt;
- *"(Meth)acryl...*/*...(meth)acryl...",* dass sowohl die "Methacryl.../...methacryl..."- als auch die "Acryl.../...acryl..."-Verbindungen umfasst sein sollen; bevorzugt sind in der vorliegenden Erfindung "Methacryl.../...methacryl..." -Verbindungen;
- *"Oligomer"* ein Makromolekül mit einer mittleren relativen Molmasse, das aus relativ wenigen miteinander verknüpften monomeren Untereinheiten (konstitutionellen Einheiten) besteht; davon unterschieden werden Monomere (aus einer Untereinheit bestehend) und Polymere (aus vielen Untereinheiten bestehend);
- *"Präpolymer"* eine Sammelbezeichnung für meist ein oligomeres, teilweise aber auch selbst bereits polymere Verbindung, die als Vor- oder Zwischenprodukt zur Synthese von Polymeren eingesetzt wird; es handelt sich dabei um ein Polymer oder Oligomer, deren Moleküle mittels reaktiver Gruppen an einer weiteren Polymerisationsreaktion teilnehmen können und somit mehr als eine strukturelle Einheit in mindestens einen Kettentyp des finalen Polymers einbringen;
- *"Polymer"* eine Subtanz, die sich aus einem Kollektiv chemisch einheitlich aufgebauter, sich in der Regel aber hinsichtlich Polymerisationsgrad, Molamasse und Kettenlänge unterscheidender Makromoleküle (Polymermoleküle) zusammensetzt;
- *"ein", "eine", "einer"* als Artikel vor einer chemischen Verbindungsklasse, z.B. vor dem Wort *"Alkylimidazolidon(meth)acrylat",* dass eine oder mehrere unter diese chemische Verbindungsklasse fallende Verbindungen, z.B. verschiedene *"Alkylimidazolidon(meth)acrylate",* gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere"*; in einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*;
- *"etwa"* vor einem Zahlenwert einen Bereich von ± 5% dieses Wertes, bevorzugt ± 2% dieses Wertes, besonders bevorzugt ± 0% dieses Wertes (also genau diesen Wert).

Ein erster Gegenstand der Erfindung ist die Verwendung eines Alkylimidazolidon(meth)acrylats als Reaktivverdünner in einer Reaktionsharz-Zusammensetzung.

Diese Reaktionsharz-Zusammensetzung ist eine Reaktionsharz-Zusammensetzung für die chemische Befestigung, typischerweise ein Injektionsmörtel. In einer typischen Ausführungsform ist der erste Gegenstand der Erfindung somit die Verwendung eines Alkylimidazolidon(meth)acrylats als Reaktivverdünner in einem Injektionsmörtel. Die Reaktionsharz-Zusammensetzung hat typischerweise eine Harzkomponente (A) und eine Härterkomponente (B), die ein Härtungsmittel (wie etwa ein Peroxid) enthält. Das als Reaktivverdünner verwendete Alkylimidazolidon(meth)acrylat kann dabei entweder in der Harzkomponente (A) oder in der Härterkomponente (B) oder zu gleichen oder unterschiedlichen Anteilen in beiden Komponenten enthalten sein, wobei es bevorzugt in der Harzkomponente (A) enthalten ist.

In einer bevorzugten Ausführungsform ist somit der erste Gegenstand der Erfindung die Verwendung eines Alkylimidazolidon(meth)acrylats als Reaktivverdünner in einem Injektionsmörtel, der eine Harzkomponente (A), die das als Reaktivverdünner verwendete Alkylimidazolidon(meth)acrylat enthält, und eine Härterkomponente (B), die ein Härtungsmittel (wie etwa ein Peroxid) enthält, umfasst.

Die Komponenten (A) und (B) sind bis zur Verwendung der Reaktionsharz-Zusammensetzung räumlich getrennt voneinander verpackt, damit erst eine Reaktion stattfindet, wenn die beiden Komponenten miteinander in Kontakt gebracht werden. Typischerweise enthält die Harzkomponente (A) neben dem Alkylimidazolidon(meth)acrylat noch mindestens eine weitere radikalisch härtbare Verbindung, zum Beispiel ein nicht alkylimidazolidonbasiertes (Meth)acrylat oder ein Urethan(meth)acrylat. Diese weitere radikalisch härtbare Verbindung dient typischerweise als Basisharz.

Ein weiterer Gegenstand der Erfindung ist ein Verfahren zur Herstellung einer Reaktionsharz-Zusammensetzung, gekennzeichnet dadurch, dass der Harzkomponente einer Reaktionsharz-Zusammensetzung mindestens ein Alkylimidazolidon(meth)acrylat als Reaktivverdünner zugesetzt wird.

Ein weiterer Gegenstand der Erfindung ist ein Verfahren zur chemischen Befestigung eines Verankerungsmittels in einem Bohrloch, gekennzeichnet dadurch, dass zur Befestigung eine Reaktionsharz-Zusammensetzung verwendet wird, welche ein Alkylimidazolidon(meth)acrylat als Reaktivverdünner enthält.

Alkylimidazolidon(meth)acrylate und ihre Herstellung sind aus zahlreichen Patentanmeldungen bekannt, zum Beispiel aus EP 0571851 A1, EP 0769493 A1, EP 0712846 A1, EP 1293502 A1, WO 2006/105926 A1 sowie WO 2011/027070 A1, deren Beschreibung von Alkylimidazolidon(meth)acrylaten und von deren Herstellung hier durch Bezugnahme aufgenommen wird.

Im Folgenden werden die geeigneten Alkylimidazolidon(meth)acrylate näher beschrieben.

Alkylimidazolidon(meth)acrylate der Formel I 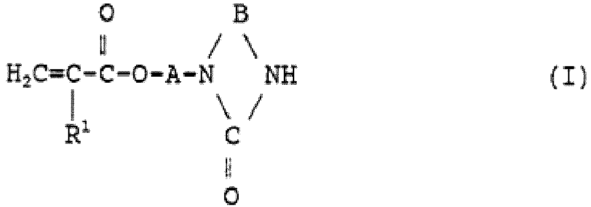 lassen sich durch Umsetzung eines Acrylsäureesters oder Methacrylsäureesters der Formel II 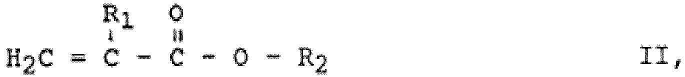 in der R¹ für Wasserstoff oder eine Methyl-, oder Ethylgruppe steht und R² für einen Alkylrest mit 1 bis 4 Kohlenstoffatomen steht,
mit einer heterocyclischen Verbindung der Formel III 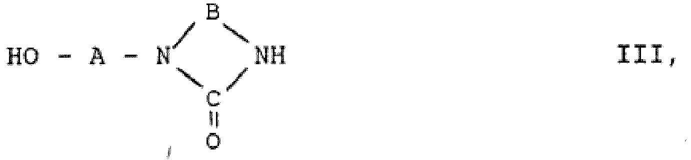 in der A und B jeweils unabhängig voneinander für eine unverzweigte oder verzweigte C₂-C₅-Kohlenwasserstoffgruppe, insbesondere Alkylgruppe stehen, unter Verwendung eines geeigneten Katalysators erhalten.

Für die Herstellung der Verbindungen I werden Acryl- oder Methacrylsäureester der Formel II verwendet, in denen R² vor allem ein Alkylrest mit 1 bis 4 Kohlenstoffatomen bedeutet. Beispielsweise seien dazu Propylacrylat, *n*-Butylacrylat, Ethylmethacrylat, *i*-Propylmethacrylat, *i*-Butylmethacrylat, *n*-Butylmethacrylat und vor allem Methylmethacrylat genannt.

Als Ausgangsstoffe der Formel III kommen solche Verbindungen in Frage, in denen A oder B eine verzweigte oder unverzweigte Alkylengruppe mit 2 bis 5 Kohlenstoffatomen darstellt, z.B -(CH₂)₂-, -(CH₂)₃-, -(CH₂)₄-, -CH₂CH(CH₃)CH₂-, -CH₂C(CH₃)₂CH₂-. Die Ringgliederzahl des Heterocyclus beträgt vorzugsweise 5 und 6. Besonders vorteilhaft wird als Verbindung III 1-(2-Hydroxyethyl)-imidazolidin-2-on, das z.B. nach der US-PS 3 254 075 gut und technisch aus Aminoethylethanolamin und Harnstoff herstellbar ist, verwendet.

In einer Ausführungsform der Erfindung wird das Alkylimidazolidon(meth)acrylat als Reaktivverdünner in einer Reaktionsharz-Zusammensetzung zur Befestigung eines Verankerungsmittels aus Stahl oder Eisen in einem Bohrloch in Beton oder Ziegel verwendet; in dieser Ausführungsform ist der prozentuale Anteil (in Gew.-% der Harzmischung) von Alkylimidazolidon(meth)acrylat in der Harzmischung vorteilhafterweise im Bereich von etwa 0.2 bis etwa 30, kann jedoch besonders vorteilhafterweise von etwa 0.5 bis etwa 10.

Die erfindungsgemäße Verwendung von Alkylimidazolidon(meth)acrylat als Reaktivverdünner führt dazu, dass es die Lastwerte in Risstests, wie sie im Beispielteil näher beschrieben sind, erhöht.

Als weitere radikalisch härtbare Verbindungen neben dem Alkylimidazolidon(meth)acrylat sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze (synonym: (Meth)acrylatharze) sind dabei aufgrund ihrer hydrolytischen Beständigkeit und ausgezeichneten mechanischen Eigenschaften am stärksten bevorzugt. Ganz besonders bevorzugt sind Vinylesterurethanharze, insbesondere Urethanmethacrylate. Zu diesen zählen als bevorzugte Harze die in der DE 10 2011 017 626 B4 beschriebenen Urethanmethacrylatharze. Diesbezüglich wird die DE 10 2011 017 626 B4, und vor allem ihre Beschreibung der Zusammensetzung dieser Harze, insbesondere in den Beispielen der DE 10 2011 017 626 B4, hier durch Bezugnahme aufgenommen.

Beispiele geeigneter ungesättiger Polyester, die in der Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylatfunktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in DE 10 2011 017 626 B4 beschriebenen Urethanmethacrylatharze (die auch als Vinylesterurethanharze bezeichnet werden), deren Zusammensetzung hier durch Bezugnahme aufgenommen wird.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglycolmono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen. Acrylsäure ist wegen ihrer geringeren Alkalistabilität weniger bevorzugt als am Kohlenwasserstoffrest substituierte Acrylsäuren.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß als weitere radikalisch härtbare Verbindungen neben dem Alkylimidazolidon(meth)acrylat verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Erfindungsgemäß sind die in den Beispielen beschriebenen weiteren Harze, die neben dem Alkylimidazolidon(meth)acrylat in der Harzkomponente vorhanden sind, als weitere radikalisch härtbare Verbindungen neben dem Alkylimidazolidon(meth)acrylat bevorzugt.

Zweckmäßig wird die Härtung des Reaktionsharzes mit einem Peroxid als Härtungsmittel initiiert. Neben dem Peroxid kann zusätzlich ein Beschleuniger verwendet werden. Alle dem Fachmann bekannten Peroxide, die zum Härten von Methacrylatharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) oder tert-Butylperoxybenzoat verwendet.

In einer Ausführungsform der Erfindung enthält die Harzmischung weitere niederviskose, radikalisch polymerisierbare Verbindungen als weitere Reaktivverdünner. Diese werden wie das Alkylimidazolidon(meth)acrylat zweckmäßig zum Basisharz gegeben und sind daher erfindungsgemäß in der Komponente (A) enthalten.

Geeignete weitere Reaktivverdünner sind in den Anmeldungen EP 1 935 860 A1 und DE 195 31 649 A1 beschrieben. Vorzugsweise enthält die Harzmischung als weiteren Reaktivverdünner einen (Meth)acrylsäureester, wobei besonders bevorzugt (Meth)acrylsäureester ausgewählt werden aus der Gruppe bestehend aus Hydroxypropyl(meth)acrylat, Propandiol-1,3-di(meth)acrylat, Butandiol-1,2-di(meth)acrylat, TrimethyIoIpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Butandiol-1,3-di(meth)acrylat, Hexandiol-1,6-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.²⁶-decan, Dicyclopentenyloxyethylcrotonat, 3-(Meth)acryloyl-oxymethyl-tricylo-5.2.1.0.²⁶-decan, 3-(Meth)cyclopentadienyl(meth)acrylat, Isobornyl(meth)acrylat und Decalyl-2-(meth)acrylat. Biogene Reaktivverdünner wie Tetrahydrofurfuryl(meth)acrylat oder Isobornylmethacrylat sind bevorzugt.

Grundsätzlich können auch andere übliche radikalisch polymerisierbaren Verbindungen, allein oder im Gemisch mit dem Alkylimidazolidon(meth)acrylat und ggf. den im vorhergehenden Absatz beschriebenen(Meth)acrylsäureestern, eingesetzt werden, z.B. Styrol, α-Methylstyrol, alkylierte Styrole, wie tert-Butylstyrol, Divinylbenzol und Vinylsowie Allylverbindungen. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Bevorzugte weitere Reaktivverdünner sind die in den Beispielen neben dem Alkylimidazolidon(meth)acrylat verwendeten weiteren Reaktivverdünner.

Die Harzmischung enthält bevorzugt des Weiteren mindestens einen Beschleuniger. Geeignete Beschleuniger sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, a-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin- und Toluidin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und para-Toluidin Ethoxylat (Bisomer® PTE).

Als Inhibitoren sowohl für die Lagerstabilität der Harzkomponente (A) als auch zur Einstellung der Gelzeit sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-oxyl-Radikale in Betracht.

Als N-oxyl-Radikale können beispielsweise solche verwendet werden, wie sie in der DE 199 56 509 beschrieben sind. Geeignete stabile N-oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Bevorzugte Inhibitoren sind 1-Oxyl-2,2,6,6-tetramethylpiperidin (TEMPO) und 1-Oxyl-2,2,6,6-tetramethylpiperidin-4-ol (TEMPOL), Katechole, besonders bevorzugt tert-ButylBrenzkatechin und Brenzk durch die funktionelle Gruppe werden die gewünschten Eigenschaften erreicht (im Vergleich zu den sonst verwendeten Reaktivverdünnern), BHT und Phenothiazin.

Die Inhibitoren können, abhängig von den gewünschten Eigenschaften der Harzmischung, entweder alleine oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Einstellung der Gelzeit der Reaktionsharz-Zusammensetzung zeigt.

Zweckmäßig sind die Inhibitoren in der ersten Komponente (A) enthalten.

In einer Ausführungsform kann die Reaktionsharz-Zusammensetzung zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung der Zweikomponenten-Dübelmasse z.B. in Diamant-gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst 3-(Meth)acryloyl-oxypropyltrimethoxysilan, 3-(Meth)acryloyl-oxypropyltriethoxysilan, 3-(Meth)acryloyl-oxymethyltrimethoxysilan, 3-(Meth)acryloyloxymethyltriethoxysilan, Vinyltrimethoxysilan, Vinyltriethoxysilan, Tetraethoxysilan, Tetramethoxysilan, Tetrapropoxysilan, Ethyl- oder Propylpolysilikat, und Gemische von zwei oder mehr davon. In dieser Hinsicht wird Bezug genommen auf die Anmeldung DE 10 2009 059210, deren diesbezüglicher Inhalt hiermit in diese Anmeldung aufgenommen wird.

Der Haftvermittler wird zweckmäßig in Mengen zwischen 1 und 10 Gew.-% bezogen auf die Harzmischung in der Komponente (A) zugegeben.

Die Komponenten (A) und (B) können ferner anorganische Zuschlagstoffe enthalten, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure), Silikate, Tonerde, Ton, Titandioxid, Kreide, Schwerspat, Feldspat, Basalt, Aluminiumhydroxid, Granit oder Sandstein, polymere Füllstoffe, wie Duroplaste oder Core-Shell-Partikel, hydraulisch härtbare Füllstoffe, wie Gips, Branntkalk oder Zement (z.B. Tonerde- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Harzkomponente (A) besonders bevorzugt sind Füllstoffe ausgewählt aus der Gruppe bestehend aus Zement, pyrogener Kieselsäure, Quarzsand, Quarzmehl, und Mischungen aus zwei oder mehreren davon. Ganz besonders bevorzugt ist für die Komponente (A) eine Mischung aus Zement (insbesondere Tonerdezement oder Portlandzement), pyrogener Kieselsäure und Quarzsand. Für die Härterkomponente (B) ist pyrogene Kieselsäure als alleiniger Füllstoff oder als einer von mehreren Füllstoffen bevorzugt; besonders bevorzugt sind neben der pyrogenen Kieselsäure noch einer oder mehrere weitere Füllstoffe vorhanden.

Ganz besonders bevorzugt sind die in den Beispielen verwendeten Füllstoffe.

Weitere denkbare Zusätze sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können vorliegen, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktionsharz-Zusammensetzung enthalten sein.

In dieser Hinsicht wird Bezug genommen auf die Anmeldungen WO 02/079341 und WO 02/079293 sowie WO 2011/128061 A1, deren diesbezüglicher Inhalt hiermit in diese Anmeldung aufgenommen wird.

Bei einer besonders bevorzugten Ausführungsform der Erfindung enthält die Komponente (A) neben dem Alkylimidazolidon(meth)acrylat und der gegebenenfalls vorhandenen weiteren radikalisch härtbaren Verbindung zusätzlich noch eine hydraulisch abbindende oder polykondensierbare anorganische Verbindung, insbesondere Zement, und die Komponente (B) neben dem Härtungsmittel noch Wasser. Derartige Hybridmörtelsysteme sind ausführlich in DE 42 31 161 A1 beschrieben. Dabei enthält die Komponente (A) vorzugsweise als hydraulisch abbindende oder polykondensierbare anorganische Verbindung Zement, beispielsweise Portlandzement oder Aluminatzement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Komponente (A) kann als polykondensierbare anorganische Verbindung auch silikatische, polykondensierbare Verbindungen, insbesondere lösliches, gelöstes und/oder amorphes Siliziumdioxid enthaltende Stoffe wie z.B. pyrogene Kieselsäure umfassen.

In einer bevorzugten Ausführungsform enthält die Komponente (A) also folglich:
- mindestens ein Alkylimidazolidon(meth)acrylat; und
- mindestens eine hydraulisch abbindende oder polykondensierbare anorganische Verbindung,
und die Komponente (B) enthält:
- mindestens ein Härtungsmittel; und
- Wasser.

In einem bevorzugten Aspekt dieser Ausführungsform ist das Alkylimidazolidon(meth)acrylat in einem weiteren, von dem Alkylimidazolidon(meth)acrylat unterschiedlichen reaktiven Lösungsmittel, insbesondere einem (Meth)acrylat oder Alkoholen, gelöst.

In einerweiteren bevorzugten Ausführungsform enthält die Komponente (A) also folglich:
- mindestens ein Alkylimidazolidon(meth)acrylat;
- mindestens eine weitere radikalisch härtbare Verbindung als Basisharz; und
- mindestens eine hydraulisch abbindende oder polykondensierbare anorganische Verbindung,
und die Komponente (B) enthält:
- mindestens ein Härtungsmittel; und
- Wasser.

In einem bevorzugten Aspekt dieser Ausführungsform ist das Alkylimidazolidon(meth)acrylat in einem weiteren, von dem Alkylimidazolidon(meth)acrylat unterschiedlichen reaktiven Lösungsmittel, insbesondere einem (Meth)acrylat, gelöst.

In einer bevorzugteren Ausführungsform enthält die Komponente (A):
- mindestens ein Alkylimidazolidon(meth)acrylat;
- mindestens einen Beschleuniger;
- mindestens einen Inhibitor; und
- mindestens eine hydraulisch abbindende oder polykondensierbare anorganische Verbindung,
und die Komponente (B) enthält:
- mindestens ein Härtungsmittel;
- mindestens einen Füllstoff, bevorzugt pyrogene Kieselsäure; und
- Wasser.

In einem bevorzugten Aspekt dieser Ausführungsform ist das Alkylimidazolidon(meth)acrylat in einem weiteren, von dem Alkylimidazolidon(meth)acrylat unterschiedlichen reaktiven Lösungsmittel, insbesondere einem (Meth)acrylat, gelöst.

In einer weiteren bevorzugteren Ausführungsform enthält die Komponente (A):
- mindestens ein Alkylimidazolidon(meth)acrylat;
- mindestens eine weitere radikalisch härtbare Verbindung als Basisharz;
- mindestens einen Beschleuniger;
- mindestens einen Inhibitor; und
- mindestens eine hydraulisch abbindende oder polykondensierbare anorganische Verbindung,
und die Komponente (B) enthält:
- mindestens ein Härtungsmittel;
- mindestens einen Füllstoff, bevorzugt pyrogene Kieselsäure; und
- Wasser.

In einem bevorzugten Aspekt dieser Ausführungsform ist das Alkylimidazolidon(meth)acrylat in einem weiteren, von dem Alkylimidazolidon(meth)acrylat unterschiedlichen reaktiven Lösungsmittel, insbesondere einem (Meth)acrylat, gelöst.

In einer besonders bevorzugten Ausführungsform enthält die Komponente (A):
- 1-Ethyl-imidazolidyl-2-on-(meth)acrylat;
- mindestens einen Beschleuniger;
- mindestens einen Inhibitor; und
- mindestens eine hydraulisch abbindende oder polykondensierbare anorganische Verbindung,
und die Komponente (B) enthält:
- mindestens ein Härtungsmittel;
- mindestens einen Füllstoff, bevorzugt pyrogene Kieselsäure; und
- Wasser.

In einem bevorzugten Aspekt dieser Ausführungsform ist das 1-Ethyl-imidazolidyl-2-on-(meth)acrylat in einem weiteren, von dem 1-Ethyl-imidazolidyl-2-on-(meth)acrylat unterschiedlichen reaktiven Lösungsmittel, insbesondere einem (Meth)acrylat, gelöst.

In einer weiteren besonders bevorzugten Ausführungsform enthält die Komponente (A):
- 1-Ethyl-imidazolidyl-2-on-(meth)acrylat;
- mindestens eine weitere radikalisch härtbare Verbindung als Basisharz;
- mindestens einen Beschleuniger;
- mindestens einen Inhibitor;
- mindestens eine hydraulisch abbindende oder polykondensierbare anorganische Verbindung, und
- mindestens einen Füllstoff, bevorzugt pyrogene Kieselsäure;
und die Komponente (B) enthält:
- mindestens ein Härtungsmittel;
- mindestens einen Füllstoff, bevorzugt pyrogene Kieselsäure; und
- Wasser.

In einem bevorzugten Aspekt dieser Ausführungsform ist das 1-Ethyl-imidazolidyl-2-on-(meth)acrylat in einem weiteren, von dem 1-Ethyl-imidazolidyl-2-on-(meth)acrylat unterschiedlichen reaktiven Lösungsmittel, insbesondere einem (Meth)acrylat, gelöst.

In einer besonders bevorzugten Ausführungsform sind die Bestandteile der Komponenten (A) und/oder (B) eines oder mehrere der Bestandteile, welche in den einzelnen Beispielen für die erfindungsbemäße Verwendung von Alkylimidazolidon(meth)acrylat als Reaktivverdünner in einer Reaktionsharz-Zusammensetzung genannt werden. Ganz besonders bevorzugt sind Reaktionsharz-Zusammensetzungen, in welchen die Komponente (A) und optional auch die Komponente (B) dieselben Bestandteile enthält oder aus denselben Bestandteilen besteht, wie sie in den einzelnen erfindungsgemäßen Beispielen genannt werden, und zwar bevorzugt in den dort genannten Anteilen.

Erfindungsgemäß wird Alkylimidazolidon(meth)acrylat als Reaktivverdünner in einer Reaktionsharz-Zusammensetzung verwendet, welche ein Mehrkomponenten-System ist, typischerweise ein Zweikomponenten-System. Dieses Mehrkomponenten-System kann in Form eines Patronen-Systems, eines Kartuschen-Systems oder eines Folienbeutel-Systems vorliegen. Bei der bestimmungsgemäßen Verwendung der erfindungsgemäßen Reaktionsharz-Zusammensetzung werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktionsharz beschickte Bohrloch eingebracht und entsprechend justiert werden.

Die Reaktionsharz-Zusammensetzung, in welcher erfindungsgemäß Alkylimidazolidon(meth)acrylat als Reaktivverdünner verwendet wird, wird erfindungsgemäß verwendet zur chemischen Befestigung von Verankerungsmitteln in Löchern, also typischerweise als Injektionsmörtel. Verankerungsmittel sind Anker, Bewehrungseisen, Schrauben und dergleichen. Die Löcher können Vertiefungen natürlichen oder nicht-natürlichen Ursprungs sein, also Risse, Spalten, Bohrlöcher und dergleichen. Es sind typischerweise Bohrlöcher, insbesondere Bohrlöcher in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. Das Verankerungsmittel besteht bevorzugt aus Metall, besonders bevorzugt aus Stahl oder Eisen, ganz besonders bevorzugt aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Bevorzugt hat das Stahl-Bohrloch Rillen.

Die Reaktionsharz-Zusammensetzung, in welcher das Alkylimidazolidon(meth)acrylat erfindungsgemäß als Reaktivverdünner verwendet wird, zeichnet sich durch eine erhöhte Belastbarkeit im dynamischen Riss aus im Vergleich zu Ausführungsformen ohne den verwendeten funktionellen Reaktivverdünner.

Die Erfindung wird im Folgenden anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

### AUSFÜHRUNGSBEISPIELE

Die Formulierungen der Vergleichsbeispiele 1 und 2 und der Beispiele 1 bis 4 basieren auf den nachfolgend angegebenen Grundzusammensetzungen.

### Liste der in den Beispielen und Referenzen verwendeten Bestandteile (Erklärung der Abkürzungen) sowie ihrer Handelsnamen und Bezugsquellen:

### Harzkomponenten:

| | |
|---|---|
| SR 348L | Dimethacrylat des 2fach ethoxylierten Bisphenol-A, SR 348L, Fa. Sartomer (CAS-Nummer: 24448-20-2) |
| HPMA | Hydroxypropylmethacrylat, Fa. Inchem (CAS-Nummer: 27813-02-1) |
| BDDMA | 1,4-Butandioldimethacrylat, Fa. Inchem (CAS-Nummer: 2082-81-7) |
| MMA | Methylmethacrylat; Fa. Sigma-Aldrich (CAS-Nummer: 80-62-6) |
| MEEU | Hydroxyethylenharnstoffmethacrylat in Methylmethacrylat (25/75); Fa Evonik (CAS-Nummer: 86261-90-7 bzw. 80-62-6) |
| Dippt | Di-Isopropanol-p-toluidin; Fa. BASF (CAS-Nummer 38668-4-3) |
| BK | 1,2-Dihydroxybenzene; Fa. Solvay (CAS-Nummer: 120-80-9) |

| | |
|---|---|
| Quarzsand | Ferchen F32 (AFS: 59; mittlerer Korndurchmesser 0,24 mm; theor. Spez. Oberfläche 102 cm²/g); Fa. Quarzwerke, Ferchen (CAS-Nummer: 14808-60-7) und |
| Zement | Secar 80; FA. Kerneos (CAS-Nummer: 1344-28-1) |
| Kieselsäure | Aerosil R812; Fa. Evonik (CAS-Nummer 68909-20-6) und Cab-O-Sil TS-720; Fa. Cabot im Verhältnis von 1,4 : 1 |

### Härterkomponenten:

| | |
|---|---|
| HIT-HY200-A | Hilti HIT-HY200-A, Fa. Hilti (Chargen-Nr.: 1803023) |

Bei den aufgelisteten Verbindungen/Produkten kann es sich - sofern nichts anderes angegeben wurde - um technische Produkte mit einer gewissen Verunreinigung handeln.

Alle in diesem Text genannten Normen (z.B. DIN-Normen) wurden in der zum jetzigen Zeitpunkt aktuellen Ausgabe verwendet.

Es wurden erfindungsgemäße Reaktionsharz-Zusammensetzungen und Vergleichs-Reaktionsharz-Zusammensetzungen hergestellt. Die Zusammensetzung der in den Reaktionsharz-Zusammensetzungen verwendeten Harzkomponenten (A) sowie die verwendeten Härterkomponenten (B) können den weiter unten gezeigten Tabellen 1 und 2 entnommen werden.

Alle hier aufgelisteten Bestandteile der Zusammensetzungen sind - soweit nicht anders angegeben - kommerziell erhältlich und wurden in der kommerziell üblichen Qualität eingesetzt. Eine Auflistung der Bestandteile, ihrer Handelsnamen und Bezugsquellen findet sich am Ende der Beispiele.

Zur Aushärtung (also als Härterkomponente (B)) wurden die derzeit kommerziell verfügbaren Härterkomponent (Hilti AG, FL-Schaan) des Injektionsmörtels Hilti HIT-HY200-A verwendet. Diese Härterkomponenten enthalten Benzoylperoxid als Härtungsmittel, des Weiteren pyrogene Kieselsäure, weitere Füllstoffe und Wasser.

Zur Herstellung der A Komponente werden zunächst unter Erwärmen auf 50°C der Aminbeschleuniger in dem entsprechenden Harz mit Reaktivverdünnern gelöst. Zu der Lösung wird anschließend der Inhibitor gegeben und gerührt, bis eine homogene Lösung erhalten wird. Anschließend werden unter Vakuum die pyrogene Kieselsäure und die anorganischen Füllstoffe mit einem Dissolver in der Harzlösung dispergiert, bis eine homogene Paste vorliegt. Die Mengen [Gew.-%] beziehen sich jeweils auf die A Komponente, soweit nicht anders angegeben ist.

### A Komponente

| **Harzkomponente A** | **Vergleich 1 (Gew.-%)** | **Beispiel 1 (Gew.-%)** | **Beispiel 2 (Gew.-%)** | **Vergleich 2 (Gew.-%)** | **Beispiel 3 (Gew.-%)** | **Beispiel 4 (Gew.-%)** |
|---|---|---|---|---|---|---|
| Sartomer SR348L | 19,2 | 19,2 | 19,2 | - | - | - |
| Urethanmethacrylat* in HPMA (65/35) | - | - | - | 12,5 | 12,5 | 12,5 |
| HPMA | 16,8 | 16,8 | 18,4 | 21,5 | 21,5 | 23,1 |
| MMA | 3,20 | - | - | 3,2 | - | - |
| MEEU in MMA (25/75) | - | 3,20 | 1,6 | - | 3,2 | 1,6 |
| Dippt | 0,72 | 0,72 | 0,72 | 0,72 | 0,72 | 0,72 |
| BK | 0,09 | 0,09 | 0,09 | 0,11 | 0,11 | 0,11 |
| Quarzsand | 40,2 | 40,2 | 40,2 | 40,2 | 40,2 | 40,2 |
| Zement | 16,95 | 16,95 | 16,95 | 16,95 | 16,95 | 16,95 |
| Kieselsäure | 2,85 | 2,85 | 2,85 | 2,85 | 2,85 | 2,85 |

| | | | | | | |
|---|---|---|---|---|---|---|
| *Produkt aus Umsetzung von Diisocyanat (MDI) zunächst mit Dipropylenglykol und anschließend mit HPMA | | | | | | |

Als Härter für das Harz wird eine kommerziell erhältliche B-Komponente von HY200A verwendet.

Für die Untersuchung der Eigenschaften dieser Zweikomponenten-Mörtelmasse werden jeweils die Harzkomponenten (A) mit der Härterkomponente (B) der Vergleichsbeispiele 1 und 2 bzw. der Beispiele 1 bis 4 in einem Volumenverhältnis von 5 : 1 mit einem Statikmischer (Mischer HIT-RE-M) vermischt.

### a) Bestimmung der Lastwerte im bewegten, zyklischen Riss

### A) Grundparameter

Die Versuche wurden auf einer Material-Prüfmaschine Z2000H der Firma Zwick, Type BX 123650.10-001 durchgeführt.

### B) Vorbereitung der Bohrlöcher

Zur Bestimmung der Versagenslast wird in mineralischem Untergrund, hier in Beton (C20/25), mittels eines Borhammers ein Bohrloch erstellt. Durch Ausblasen mit Druckluft, Reinigung mittels passender Stahlbürste und nochmaligem Ausblasen mit Druckluft wird das Bohrloch gereinigt und es wird die aus der Harzkomponente (A) und der Härterkomponente (B) bestehende Zweikomponenten-Mörtelmasse nach dem Hindurchführen durch einen statischen Mischer vermischt in das Bohrloch mit einem Bohrlochdurchmesser von 12mm und einer Bohrtiefe von 110mm eingebracht. Eine Ankerstange M10 geeigneter Stahlfestigkeit wird sofort in die noch nicht ausgehärtete Masse gesetzt und es wird 24 Stunden abgewartet. Nach der Aushärtung der Mörtelmasse wird der Versuch wie im nächsten Abschnitt beschrieben durchgeführt.

### C) Versuchsdurchführung

Der Dübel wird mit einer steigenden Dauerlast in 200 Risswechselschritten (Rissöffnung zwischen 0,1 und 0,3 mm) bis zum Versagen bzw. bis zu 2000 Risswechselschritten mit folgenden Lasten geprüft:

| | | |
|---|---|---|
| n = | 0 - 200 | 8,60 kN (2,50 N/mm²) |
| n = | 201 - 400 | 9,50 kN (2,75 N/mm²) |
| n = | 401 - 600 | 10,4 kN (3,00 N/mm²) |
| n = | 601 - 800 | 11,2 kN (3,25 N/mm²) |
| n = | 801 - 1000 | 12,1 kN (3,50 N/mm²) |
| n = | 1001 - 1200 | 13,0 kN (3,75 N/mm²) |
| n = | 1201 - 1400 | 13,8 kN (4,00 N/mm²) |
| n = | 1401 - 1600 | 14,7 kN (4,25 N/mm²) |
| n = | 1601 - 1800 | 15,5 kN (4,50 N/mm²) |
| n = | 1801 - 2000 | 16,4 kN (4,75 N/mm²) |

Die mit dieser Untersuchung erhaltenen Ergebnisse sind in der nachfolgenden Tabelle zusammengestellt. Für die Auswertung der Ergebnisse wurde der Mittelwert aus den Zyklen bis zum Versagen des Dübels gebildet. Nach 2000 Zyklen wurden die Messungen beendet.

| | **Vergleich 1** | **Beispiel 1** | **Beispiel 2** | **Vergleich 2** | **Beispiel 3** | **Beispiel 4** |
|---|---|---|---|---|---|---|
| Anzahl Versuche | 6 | 6 | 3 | 6 | 6 | 3 |
| Mittelwert Zyklen | 613 | 1327 | 1698 | 1165 | 1298 | 1253 |
| Anzahl Versuche >2000 Zyklen [%] | 0 | 33 | 33 | 0 | 33 | 33 |

Wie aus der obigen Tabelle hervorgeht, werden nur mit den erfindungsgemäßen Mörtelmassen gemäß den Beispielen 1 bis 4 verlängerte Zyklenanzahlen erreicht. Zudem weisen die erfindungsgemäßen Mörtelmassen eine größere Anzahl an Versuchen auf, die bis zum Ende des Tests durchgelaufen sind (kein Versagen des Dübels bis 2000 Zyklen). Wie aus den Vergleichsbeispielen 1 und 2 hervorgeht ist dies ohne Zugabe des erfindungsgemäßen Additivs nicht der Fall.

## Patentansprüche

1. Verwendung von mindestens einem Alkylimidazolidon(meth)acrylat der Formel (I) 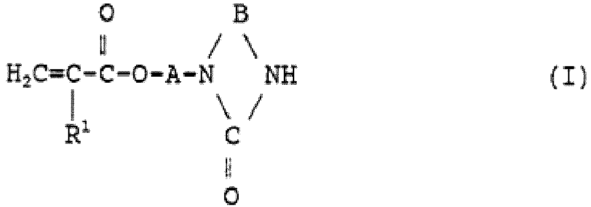 worin
R¹ für Wasserstoff oder eine Methyl-, oder Ethylgruppe steht und
A und B jeweils unabhängig voneinander für eine unverzweigte oder verzweigte C₂-C₅-Kohlenwasserstoffgruppe, insbesondere Alkylgruppe steht,
als Reaktivverdünner in einer Reaktionsharz-Zusammensetzung zur chemischen Befestigung eines Verankerungsmittels in einem Bohrloch.

2. Verwendung nach Anspruch 1, wobei in Formel (I) A für eine Methyl-, Ethyl-, n-Propyl-, Isopropyl-, n-Butyl- und Isobutylgruppe steht.

3. Verwendung nach Anspruch 1 oder 2, wobei in Formel (I) B für eine Ethyl- oder n-Propylgruppe steht.

4. Verwendung nach Anspruch 3, wobei das mindestens eine Alkylimidazolidon(meth)acrylat der Formel (I) 1-Ethyl-imidazolidyl-2-on-(meth)acrylat ist.

5. Verwendung nach einem der vorhergehenden Ansprüche, wobei das mindestens eine Alkylimidazolidon(meth)acrylat der Formel (I) gelöst in einem inerten oder einem weiteren, von Alkylimidazolidon(meth)acrylaten der Formel (I) unterschiedlichen reaktiven Lösungsmittel vorliegt.

6. Verwendung nach Anspruch 5, wobei das inerte Lösungsmittel Wasser ist.

7. Verwendung nach Anspruch 5, wobei das reaktive Lösungsmittel aus der Gruppe bestehend aus Methyl-, Ethyl-, n-Propyl-, Isopropyl-, n-Butyl- und Isobutyl-, Hydroxypropyl-, 1,3- bzw. 1,4-Butandioldi-, 1,6 Hexandioldi-, Ethylenglykoldi-, Polyethylenglykoldi, Tricyclopentadienyldi-, Trimethylolpropantri-, Acetoacetoxyethyl(meth)acrylat und ethoxyliertem Bisphenol A Dimethacrylat ausgewählt ist.

8. Verwendung nach einem der vorhergehenden Ansprüche, wobei die Reaktionsharz-Zusammensetzung eine Harzkomponente (A) umfasst, die das mindestens eine Alkylimidazolidon(meth)acrylat der Formel (I) enthält, und eine Härterkomponente (B) umfasst, die ein Härtungsmittel enthält.

9. Verwendung nach einem der vorhergehenden Ansprüche, wobei die Reaktionsharz-Zusammensetzung eine Harzkomponente (A) und eine Härterkomponente (B) umfasst, die das mindestens eine Alkylimidazolidon(meth)acrylat der Formel (I) und ein Härtungsmittel enthält, umfasst.

10. Verwendung nach einem der vorhergehenden Ansprüche, wobei das Härtungsmittel ein Peroxid ist.

11. Verwendung nach einem der vorhergehenden Ansprüche, wobei mindestens eine der Komponenten (A) oder (B) einen organischen und/oder anorganischen Zuschlagstoff enthält.

12. Verwendung nach Anspruch 11, wobei der anorganische Zuschlagstoff aus der Gruppe bestehend aus Quarz, Glas, Korund, Porzellan, Steingut, Leichtspat, Schwerspat, Gips, Talk, Kreide oder Gemischen davon ausgewählt ist, und wobei der Zuschlagstoff in Form von Sand, Mehl, oder Formkörpern vorliegen kann.

13. Verwendung nach einem der vorhergehenden Ansprüche zur Erhöhung der Leistungsfähigkeit einer Reaktionsharz-Zusammensetzung im gerissenen oder ferner von Einreißen bedrohten Beton, insbesondere im dynamischen Riss verglichen zu der Leistungsfähigkeit im gerissenen oder ferner von Einreißen bedrohten Beton, insbesondere im dynamischen Riss bei Verwendung einer gleichen Menge eines anderen, üblichen Reaktivverdünners.

14. Verwendung nach einem der vorhergehenden Ansprüche, wobei das Verankerungsmittel aus Stahl oder Eisen ist.

15. Verwendung nach einem der vorhergehenden Ansprüche, wobei das Bohrloch ein Bohrloch in mineralischem oder metallischem Untergrund ist, bevorzugt einem Untergrund ausgewählt aus der Gruppe bestehend aus Beton, Porenbeton, Ziegelwerk, Kalksandstein, Sandstein, Naturstein, Glas und Stahl.

16. Harzmischung umfassend mindestens eine radikalisch härtbare Verbindung als Basisharz, mindestens einen Beschleuniger, mindestens einen Inhibitor und mindestens ein Alkylimidazolidon(meth)acrylat der Formel (I) 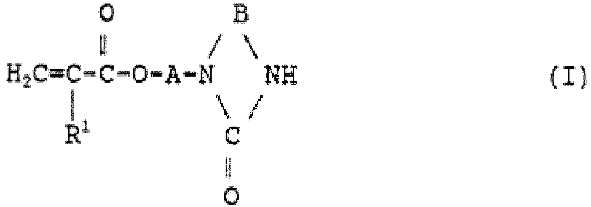 worin
R¹ für Wasserstoff oder eine Methyl-, oder Ethylgruppe steht und
A und B jeweils unabhängig voneinander für eine unverzweigte oder verzweigte C₂-C₅-Kohlenwasserstoffgruppe, insbesondere Alkylgruppe steht,
als Reaktivverdünner.

17. Harzmischung nach Anspruch 16, wobei in Formel (I) A für eine Methyl-, Ethyl-, n-Propyl-, Isopropyl-, n-Butyl- und Isobutylgruppe steht.

18. Harzmischung nach Anspruch 16 oder 17, wobei in Formel (I) B für eine Ethyl- oder n-Propylgruppe steht.

19. Harzmischung Anspruch 18, wobei das mindestens eine Alkylimidazolidon(meth)acrylat der Formel (I) 1-Ethyl-imidazolidyl-2-on-(meth)acrylat ist.

20. Harzmischung nach einem der Ansprüche 16 bis 19, wobei das mindestens eine Alkylimidazolidon(meth)acrylat der Formel (I) gelöst in einem inerten oder einem weiteren, von Alkylimidazolidon(meth)acrylaten der Formel (I) unterschiedlichen reaktiven Lösungsmittel vorliegt.

21. Harzmischung nach Anspruch 20, wobei das inerte Lösungsmittel Wasser ist.

22. Harzmischung nach Anspruch 20, wobei das reaktive Lösungsmittel aus der Gruppe bestehend aus Methyl-, Ethyl-, n-Propyl-, Isopropyl-, n-Butyl- und Isobutyl-, Hydroxypropyl-, 1,3- bzw. 1,4-Butandioldi-, 1,6 Hexandioldi-, Ethylenglykoldi-, Polyethylenglykoldi, Tricyclopentadienyldi-, Trimethylolpropantri-, Acetoacetoxyethyl(meth)acrylat und ethoxyliertem Bisphenol A Dimethacrylat ausgewählt ist.

23. Harzkomponente umfassend eine Harzmischung nach einem der Ansprüche 16 bis 22, mindestens einen anorganischen Zuschlagstoff und gegebenenfalls einen weiteren organischen Zuschlagstoff enthält.

24. Harzkomponente nach Anspruch 23, wobei der anorganische Zuschlagstoff aus der Gruppe bestehend aus Quarz, Glas, Korund, Porzellan, Steingut, Leichtspat, Schwerspat, Gips, Talk, Kreide oder Gemischen davon ausgewählt ist, und wobei der Zuschlagstoff in Form von Sand, Mehl, oder Formkörpern vorliegen kann.

25. Verfahren zur chemischen Befestigung eines Verankerungsmittels in einem Bohrloch, insbesondere im gerissenen oder ferner von Einreißen bedrohten Beton, **gekennzeichnet dadurch, dass** zur Befestigung eine Reaktionsharz-Zusammensetzung verwendet wird, welche ein Alkylimidazolidon(meth)acrylat der Formel (I) 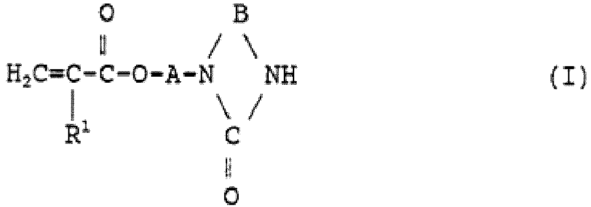 worin
R¹ für Wasserstoff oder eine Methyl- oder Ethylgruppe steht und
A und B jeweils unabhängig voneinander für eine unverzweigte oder verzweigte C₂-C₅-Kohlenwasserstoffgruppe, insbesondere Alkylgruppe steht,
als Reaktivverdünner enthält.
